# EUROPEAN PATENT SPECIFICATION

(11) **EP 0 798 841 B1**
(45) Date of publication and mention of the grant of the patent: **26.12.2007**
(21) Application number: 97400694.2
(22) Date of filing: 27.03.1997
(51) Int. Cl.: H02J 7/10

(54) **Charging apparatus**
Ladegerät
Dispositif de chargement

(30) Priority: 29.03.1996 JP 10407996; 29.03.1996 JP 10408096
(43) Date of publication of application: 01.10.1997
(73) Proprietor: Sony Corporation, Tokyo (JP)
(72) Inventor: Umetsu, Koji, Shinagawa-ku, Tokyo (JP)
(74) Representative: Thévenet, Jean-Bruno

(56) References cited:
- EP-A- 0 657 983
- EP-A- 0 723 326
- DE-A- 4 431 620
- FR-A- 2 733 093
- US-A- 5 408 170
- PATENT ABSTRACTS OF JAPAN vol. 095, no. 004, 31 May 1995 & JP 07 031073 A (SANYO ELECTRIC CO LTD), 31 January 1995
- PATENT ABSTRACTS OF JAPAN vol. 095, no. 005, 30 June 1995 & JP 07 039081 A (SANYO ELECTRIC CO LTD), 7 February 1995

## Description

### BACKGROUND OF THE INVENTION

### Field of the Invention

The present invention relates to a charging apparatus for charging a secondary battery.

### Description of the Related Art

In a charging apparatus which is used for charging a secondary battery such as a lithium battery or the like, a constant current charge and a constant voltage charge are generally executed.

The charging apparatus using such a charging method has a construction, for example, as shown in Figure 10. Figure 11 shows a relationship (output characteristic of the charging apparatus) between the charging voltage V and the charging current I. Figure 12 shows relationships (charging characteristic curves) between the charging voltage V • charging current I and the charging time T.

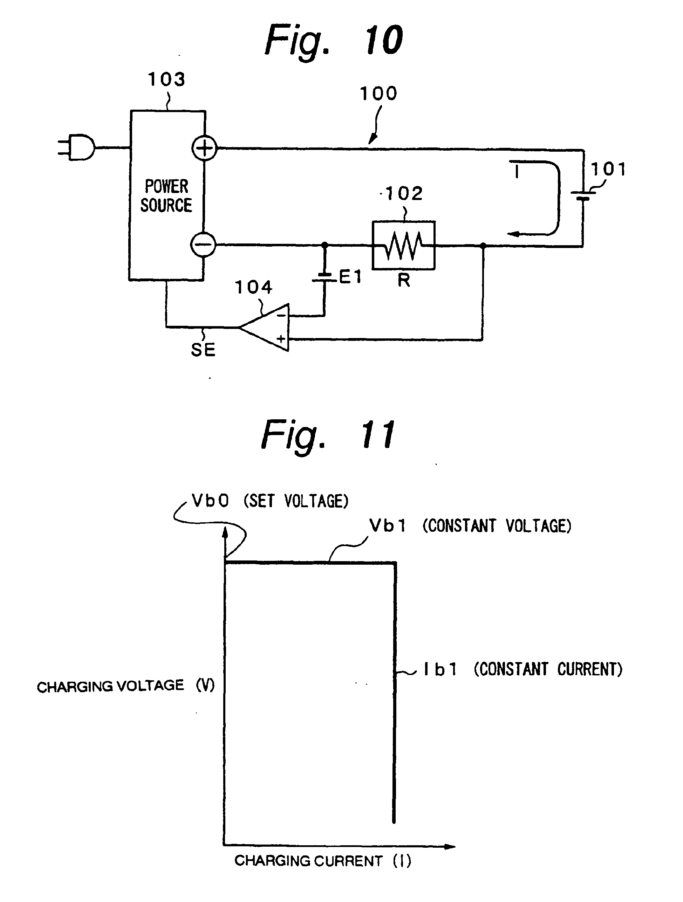

In the charging apparatus 100 of Figure 10, a secondary battery 101 and a current detecting resistor 102 are serially connected to a power source 103. That is, a positive terminal of the secondary battery 101 is connected to a positive terminal of the power source 103. A negative terminal of the secondary battery 101 is connected to one end of the current detecting resistor 102 and the other end of the current detecting resistor 102 is connected to a negative terminal of the power source 103. Positive and negative input terminals of a comparator 104 are connected to respective ends of the current detecting resistor 102 and an output terminal of the comparator 104 is connected to the power source 103.

In such a construction, since a charging at a constant current Ib1 is finished and a charging at a constant voltage Vb1 is started at the end of the charging of the secondary battery 101, the charging current I is reduced. When the comparator 104 detects that the charging current I is equal to or less than a predetermined value E1, supply of a charging continuation signal SE to the power source 103 is stopped, thereby finishing the charging process. That is, the comparator 104 detects the voltage across the current detecting resistor 102, thereby detecting that the secondary battery 101 is fully charged.

As the above-mentioned current detecting resistor 102 of the charging apparatus 100, a resistor of low resistance, for example, (R = 0.1Ω) is used for electric power consumption reasons or the like. However, since the charging current I at the end of the charging of the secondary battery 101 is a low current, for example, I = 0.2A, the voltage which is detected by the comparator 104 is an extremely small voltage E1 = I • R = 20 mV. As the comparator 104 for detecting such a tiny voltage, a high-precision comparator in which an offset voltage is extremely low has to be used, which has the drawback that it is expensive.

Even after completion of the charging process, it may arise that the capacity of the battery is reduced by, for example, consumption in the battery, consumption due to the impedance of the power source 103 when the apparatus is left in a stop state, consumption, for example, in a portable telephone main body, or the like. Generally, when the charging process is continued even after attainment of full charge, the occurrence of a drop in the battery capacity can also be prevented. However, there is then the problem that when a voltage is continuously applied to the secondary battery 100, the life of the battery is shortened.

Further, when a plurality of, for example, two secondary batteries are connected in parallel and are charged by using the foregoing charging apparatus 100, if during the charging of one of the secondary batteries, the other secondary battery is connected, the problem may arise that the charging is discontinued due to an erroneous discrimination, irrespective of the fact that one of the secondary batteries is being charged.

US 5,408,170 describes a device for charging secondary batteries according to the pre-characterizing portion of claim 1.

### OBJECTS AND SUMMARY OF THE INVENTION

It is an object of the invention to provide a cheap charging apparatus which prevents the occurrence of a drop in battery capacity without deteriorating a secondary battery.

Another object of the invention is to provide a charging apparatus which can prevent an erroneous discrimination about the end of charging even if a plurality of secondary batteries are connected in parallel.

According to the invention, there is provided a charging apparatus comprising means for controlling so as to charge a connected secondary battery by a constant current, the voltage during the constant-current charging phase being equal to or less than a first value, and, when a terminal voltage of said secondary battery rises to said first value, to charge said battery by a constant voltage having said first value, the current during the constant-voltage charging phase being equal to or less than said constant current, the apparatus comprising: switching means for shutting off a charging current at a certain period; comparing means for comparing with a first reference voltage a voltage difference between a first voltage on the power source side of said switching means when said charging current is shut off and a second voltage on said secondary battery side whereby to produce a first comparison result; and control means for stopping the charging or displaying an indication of the end of the charging process in accordance with said first comparison result; characterized in that said comparing means is adapted to perform a comparison with a second reference voltage whereby to produce a second comparison result and the control means is adapted for supplying/discontinuing charging current, or displaying indications, in accordance with the first and second comparison results. The invention also relates to a corresponding charging method, as defined in the independent method claim. Preferred embodiments of the charging apparatus and charging method are defined in the dependent claims.

According to a first aspect, the comparing means is adapted to compare the voltage difference with the second reference voltage after an elapse of a predetermined time from the stop of the charge whereby to produce the second comparison result and the control means is adapted to start a re-charge in comparison with the second comparison result.

According to a second aspect, the charging apparatus is adapted for controlling so as to charge a plurality of secondary batteries by the constant current and, when a terminal voltage of each of the secondary batteries rises to the first value, to charge the secondary batteries by the constant voltage; the switching means is adapted to shut off the charging current of one of the secondary batteries at a certain period; and the comparing means comprises a first comparator for comparing with the first reference voltage a voltage difference between a first voltage on the power source side of the switching means when the charging current is shut off and a second voltage on the secondary battery side; and a second comparator for comparing a negative terminal voltage of one of the secondary batteries with the second reference voltage.

According to the above construction, since the charging is continued or stopped by comparing the charging voltage of the secondary battery and a predetermined reference voltage, the construction can be simplified and a state of full charge can be maintained. According to the invention, the product costs can be reduced and a reliability of the charging can be increased. Since the current detecting resistor needed in the conventional apparatus is unnecessary, the number of parts can be reduced. The voltage drop occurring when the current flows in the current detecting resistor is eliminated. Thus, the charging time of the secondary battery can be shortened.

According to the first aspect, a re-charging is started when the voltage difference is set to the second reference voltage after the stopping of the charging process. This avoids deterioration in the life of the secondary battery and maintains the fully-charged state.

According to the second aspect, a direction of the charging current of the secondary battery which has already been charged is detected, when the direction of the charging current is reversed, the charging process is stopped and the apparatus waits, and when the direction of the charging current is again reversed, the charging process is restarted, so that an erroneous discrimination about the end of charging can be prevented. According to the invention, even if a plurality of secondary batteries are charged in parallel, an erroneous decision about the end of the charging can be prevented, so that the reliability of the charging can be raised and the rapid deterioration of the secondary battery can be prevented.

The above and other advantages and features of the present invention will become apparent from the following detailed description of embodiments thereof, given by way of example, and the appended claims, with reference to the accompanying drawings, in which:

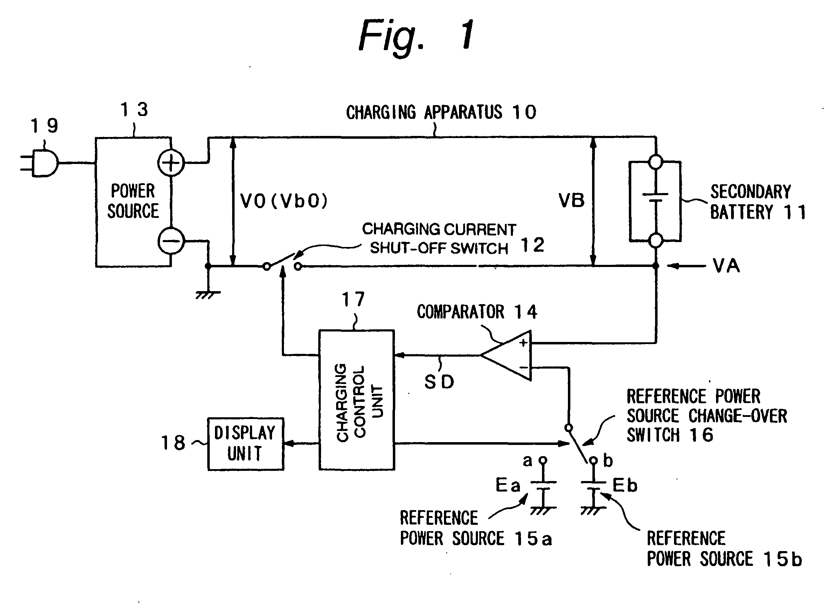

Figure 1 is a block diagram for showing a first embodiment of a charging apparatus of the invention;

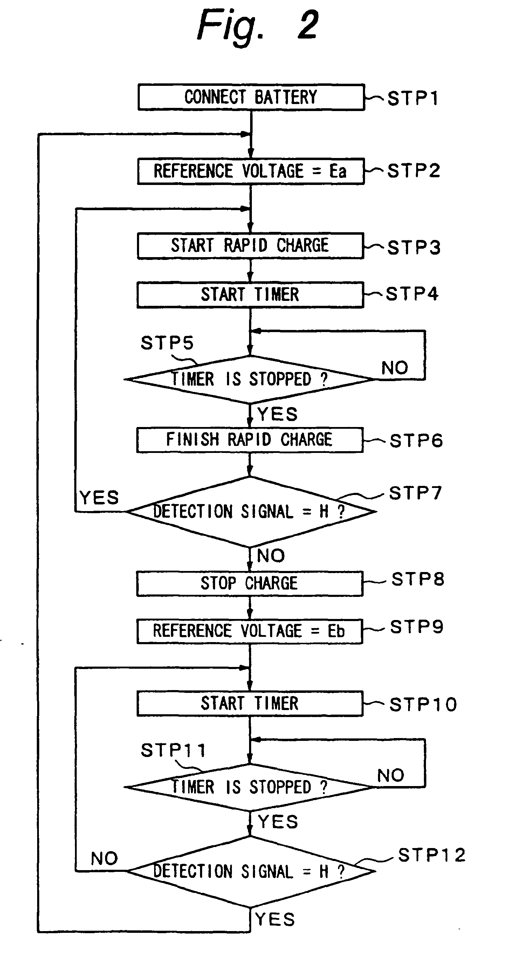

Figure 2 is a flowchart for explaining an operation example of the charging apparatus shown in Figure 1;

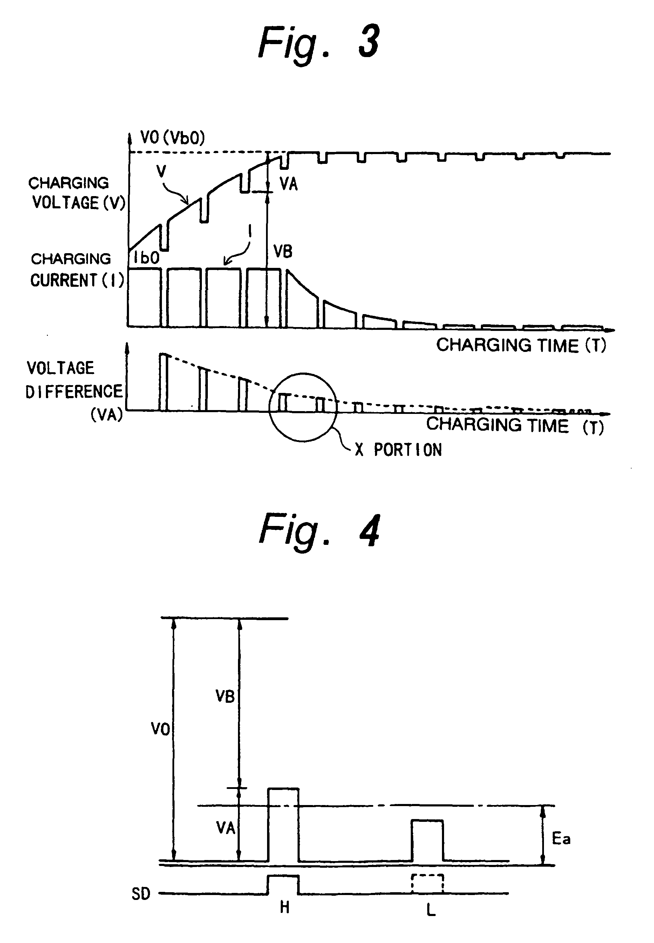

Figure 3 is a first diagram showing the relationships (charging characteristic curves) between charging voltage • current and charging time of the charging apparatus shown in Figure 1;
Figure 4 is an enlarged diagram of a portion "X" shown in Figure 3;

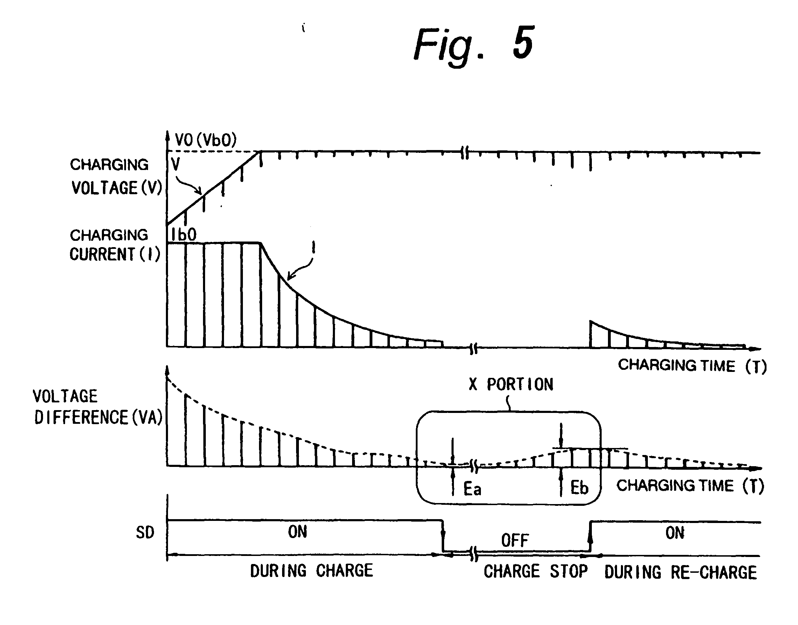

Figure 5 is a second diagram showing the relationships (charging characteristic curves) between the charging voltage • current and the charging time of the charging apparatus shown in Figure 1;

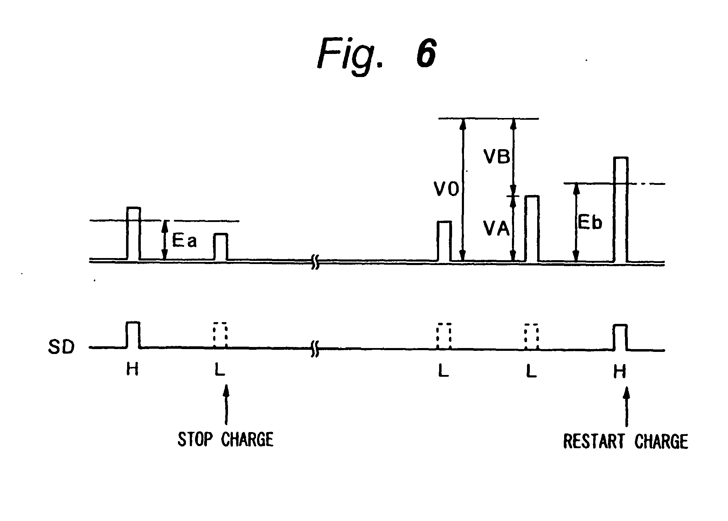

Figure 6 is an enlarged diagram of a portion "X" shown in Figure 5;

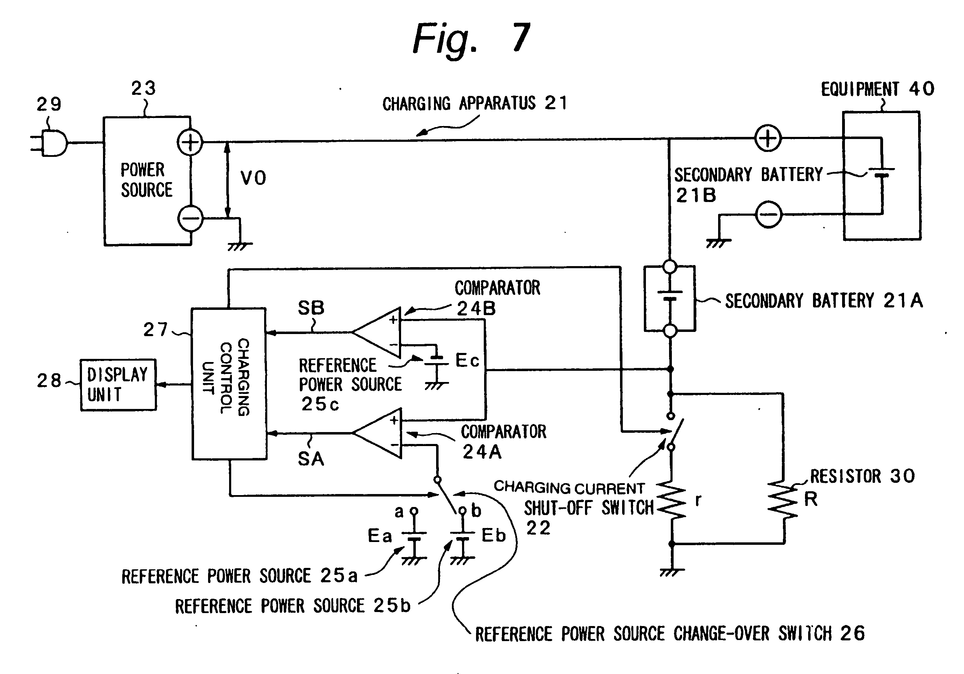

Figure 7 is a block diagram showing a second embodiment of a charging apparatus of the invention;

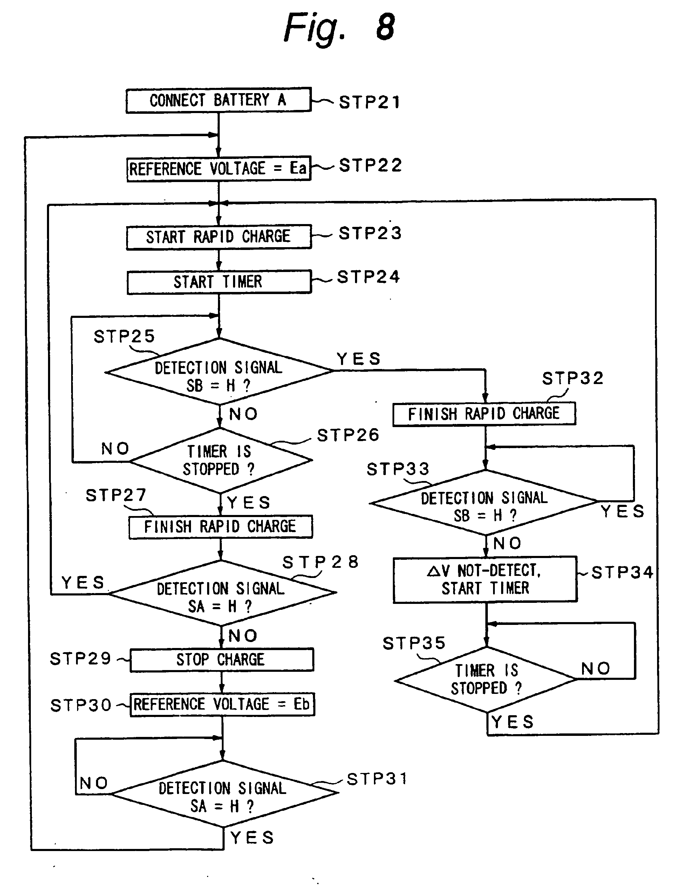

Figure 8 is a flowchart for explaining an operation example of the charging apparatus shown in Figure 7;

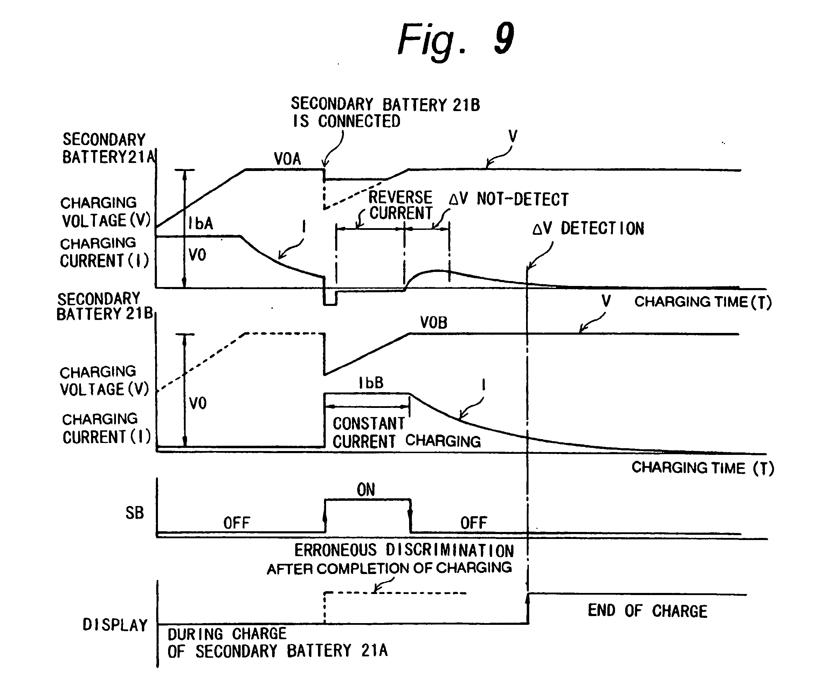

Figure 9 is a diagram showing the relationships (charging characteristic curves) between charging voltage • current and a charging time of the charging apparatus shown in Figure 7;
Figure 10 is a block diagram showing an example of a conventional charging apparatus;

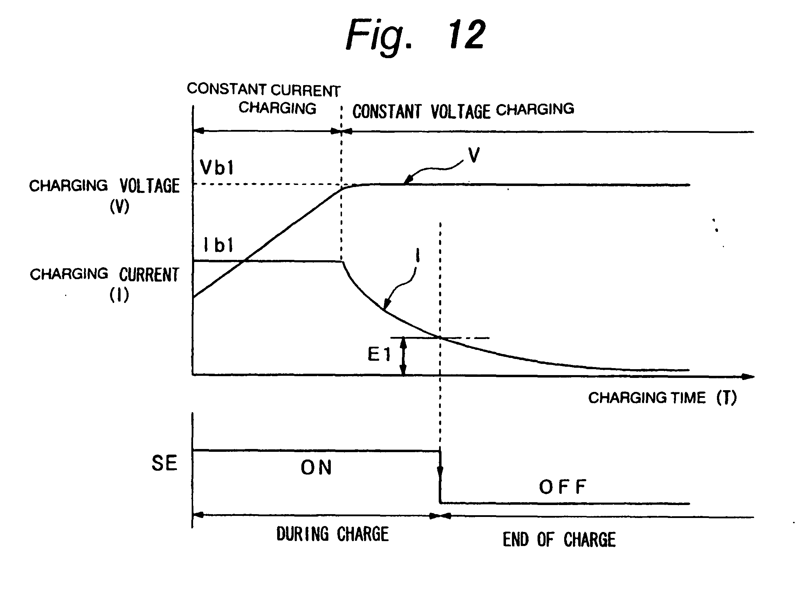

Figure 11 is a diagram showing the relationship (output characteristics of the charging apparatus) between a general output voltage and a charging current; and
Figure 12 is a diagram showing the relationships (charging characteristic curves) between charging voltage • current and a charging time of the charging apparatus shown in Figure 7.

### DETAILED DESCRIPTION OF THE PREFERRED EMBODIMENTS

Preferred embodiments of the invention will be described in detail hereinbelow with reference to the attached drawings.

Since the embodiments which will be described hereinbelow are preferred specific examples of the invention, various limitations which are technically preferable are given. However, the scope of the invention is not limited to these embodiments as long as there is no explicit statement limiting the invention in the following description.

Figure 1 is a constructional diagram showing a first embodiment of a charging apparatus of the invention.

In the charging apparatus 10 of Figure 1, a secondary battery 11 and a charging current shut-off switch 12 are serially connected to a power source 13. That is, a positive terminal of the secondary battery 11 is connected to a positive terminal of the power source 13. A negative terminal of the secondary battery 11 is connected to one end of the charging current shut-off switch 12 and the other end of the charging current shut-off switch 12 is connected to a negative terminal of the power source 13. Further, the negative terminal of the secondary battery 11 is connected to a positive input terminal of a comparator 14. A terminal of a reference power source change-over switch 16 of reference power sources 15a and 15b is connected to a negative input terminal of the comparator 14. An output terminal of the comparator 14 is connected to a charging control unit 17. The charging control unit 17, charging current shut-off switch 12, reference power source change-over switch 16, and a display unit 18 are connected.

For such a construction, an operation example of the charging process will now be described with reference to the flowchart of Figure 2.

First, an output voltage VO of the power source 13 is adjusted and set so as to be equal to a full charge voltage Vb0 (refer to Figure 3) of the secondary battery 11, for example, 8.4V in a state (no load state) in which the secondary battery 11 is not connected to a load. An AC connector 19 is connected to an AC power source (AC 100V) and the secondary battery 11 is connected (step STP1).

The charging control unit 17 operates the reference power source change-over switch 16 so as to be switched to, for instance, a contact (a) side of the reference power source 15a (step STP2). The charging control unit 17 starts a rapid charge and also starts a timer (steps STP3, 4) and finishes the rapid charge when the timer stops (steps STP5, 6). That is, the charging control unit 17 on/off controls the charging current shut-off switch 12 at a predetermined period or an arbitrary period after the start of the rapid charge. For example, the charging current shut-off switch 12 is turned on for only three minutes after the start of the rapid charge, thereby supplying the charging current. After the elapse of three minutes, the charging current shut-off switch 12 is turned off, thereby shutting off the charging current.

The comparator 14 compares a voltage difference VA between the output voltage V0 of the power source 13 at the time of no load, which is supplied to the positive input terminal when the charging current is shut off, and an open battery voltage VB, with a reference voltage Ea of the reference power source 15a which is supplied to the negative input terminal, thereby detecting a voltage ΔV across the charging current shut-off switch 12 and generating a detection signal SD to the charging control unit 17.

When the detection signal SD is at the high level (see figure 4), the charging control unit 17 determines that the charging is progressing, allows the display unit 18 to display "in charge", returns to step STP3, and repeats the above-mentioned processes (step STP7). When the detection signal SD is at the low level, the charging control unit 17 decides that charging has stopped and allows the display unit 18 to display "charge stop", thereby stopping the charging process (step STP8).

The processes of steps STP1 to STP8 relate to the example of the charging operation.

Figure 3 is a diagram showing relationships (charging characteristic curves) between the charging voltage V • charging current I of the charging apparatus 10, the voltage difference VA, and the charging time T. Figure 4 is an enlarged diagram of a portion "X" in Figure 3. A relationship (output characteristic of the charging apparatus) between the charging voltage V and the charging current I is similar to that of Figure 11.

In the shut-off period of the charging current I (period in which the charging voltage V drops), the voltage difference VA between the output voltage VO of the power source 13 at the time of no load and the open battery voltage VB is supplied to the comparator 14 and is compared with the reference voltage Ea of the reference power source 15a. The voltage ΔV across the charging current shut-off switch 12 is detected and the detection signal SD is outputted to the charging control unit 17. When the detection signal SD is at the low level, that is, when the voltage difference VA is equal to or less than the reference voltage Ea, the charging is stopped.

The output of the detection signal SD of the comparator 14 is valid only in the shut-off period of the charging current I and it is considered to be invalid at other times. Therefore, the output of the detection signal SD in the period in which the charging current I is not shut off is at the high or low level depending on the circuit setting.

In the construction as mentioned above, the voltage ΔV is set to, for example, 80 mV. As a comparator 14 for detecting the voltage ΔV of 80 mV, even if a voltage of about 5 mV as a variation of an offset voltage is considered, it is a non-problematic level, so that a general IC can be used. Since the charging control unit 17 does not need to make a highly accurate detection of an analog voltage, a cheap IC of 1k ROM or less such as logic circuit, one-chip microcomputer, or the like can be used.

An operation example of re-charging after the stopping of the charging will now be described with reference to the flowchart of Figure 2.

When the charging of the secondary battery 11 is stopped (step STP8), the charging control unit 17 operates the reference power source change-over switch 16, thereby switching to, for example, a contact (b) side of the reference power source 15b (step STP9). A reference voltage Eb of the reference power source 15b and the reference voltage Ea of the reference voltage 15a are set as Eb (for example, 120 mV) > Ea (for example, 80 mV).

The charging control unit 17 starts the timer (step STP10). When the timer stops (step STP11), the comparator 14 compares the voltage difference VA between the output voltage VO of the power source 13 at the time of no load, which is supplied to the positive input terminal, and the open battery voltage VB, with the reference voltage Eb of the reference power source 15b which is supplied to the negative input terminal, thereby detecting the voltage ΔV across the charging current shut-off switch 12 in the same period as that in steps STP4 and STP5. The detection signal SD is transmitted to the charging control unit 17.

When the detection signal SD is at the high level, the charging control unit 17 decides that charging is again executed, allows the display unit 18 to display "in re-charge", returns to step STP2, and repeats the above-mentioned processes, (step STP12). When the detection signal SD is at the low level, the charging control unit 17 determines that the charging stop state continues, allows the display unit 18 to continuously display "charge stop", returns to step STP10, and repeats the above-mentioned processes. When it is set that the comparing process of the comparator 14 is continued even after the stopping of the charging process, the timer process (steps STP10, 11) of the charging control unit 17 can be omitted.

The above steps relate to the example of the re-charging operation.

Figure 5 is a diagram showing relationships (charging characteristic curves) among the charging voltage • current and the charging time of the charging apparatus 10 Figure 6 is an enlarged diagram of a portion "X" in Figure 5.

When the battery capacity decreases after the stopping of the charging process, the voltage difference VA rises as compared with that at the time when charging is stopped. Consequently, after a predetermined time has elapsed after the stopping of the charging process, the voltage difference VA between the output voltage VO of the power source 13 at the time of no load and the open battery voltage VB is inputted to the comparator 14 at a predetermined period and is compared with the reference voltage Eb of the reference voltage 15b, thereby detecting the voltage ΔV across the charging current shut-off switch 12. The detection signal SD is outputted to the charging control unit 17 When the detection signal SD is at the high level, namely, when the voltage difference VA is equal to or higher than the reference voltage Eb, the re- charge is started.

As mentioned above, in the charging apparatus 10, since a general comparator can be used to detect the voltage and a general microcomputer can be used to control the charge, the costs of the apparatus itself can be reduced. Charging is continued until the voltage difference VA is set to the reference voltage Ea after the start of the charging process. Further, when the voltage difference VA is set to the reference voltage Eb after the stopping of the charging process, re-charging is started. Consequently, the life of the secondary battery 11 is not deteriorated and the fully-charged state can be maintained.

Although the two reference power sources are set and the stopping of charging and the starting of re-charging are detected in the above-mentioned first embodiment, it can be sufficient to display only in-charge/end of charging (the charging current is continuously supplied). By setting a plurality of reference power sources, for example, a degree of charging can be also detected by switching the display during the charging process.

Figure 7 is a constructional diagram showing a second embodiment of a charging apparatus of the invention. In this embodiment, as a charging apparatus which can charge a plurality of secondary batteries in parallel, a charging apparatus will be described which has a function of connecting one secondary battery and charging it and a function to connect an equipment or the like such as a portable telephone or the like having therein one secondary battery to an output terminal.

In the charging apparatus 20 of figure 7, a secondary battery 21A and a charging current shut-off switch 22 are serially connected to a power source 23. Further, a secondary battery 21B built into an equipment 40 such as a portable telephone or the like is connected in parallel with the secondary battery 21A through an output terminal. That is, positive terminals of the secondary batteries 21A and 21B are connected to a positive terminal of the power source 23, a negative terminal of the secondary battery 21A is connected to one end of the charging current shut-off switch 22. The other end of the charging current shut-off switch 22, a negative terminal of the secondary battery 21B, and a negative terminal of the power source 23 are connected to the ground. A resistor 30 is connected in parallel with the charging current shut-off switch 22.

The negative terminal of the secondary battery 21A is connected in parallel with positive input terminals of comparators 24A and 24B. A terminal of a reference power source change-over switch 26 of reference power sources 25a and 25b is connected to a negative input terminal of the comparator 24A. An output terminal of the comparator 24A is connected to a charging control unit 27. Further, a negative terminal of a reference power source 25c is connected to a negative input terminal of the comparator 24B. An output terminal of the comparator 24B is connected to the charging control unit 27. The charging current shut-off switch 22, reference power source change-over switch 26, and a display unit 28 are connected to the charging control unit 27.

In the case where two secondary batteries are charged in parallel, their battery voltages are ordinarily different. Therefore, the charging apparatus does not charge the secondary battery having the higher battery voltage but charges only the secondary battery having a low battery voltage. For example, when an uncharged secondary battery 21B is connected at a timing shown in Figure 9 while the secondary battery 21A is being charged by a charge voltage V0A, the charging voltage is set to V0B. Now, assuming that the charging voltage V0B is lower than the charging voltage V0A, the charge of the secondary battery 21A is shut off in the middle of the charging process and a current reversely flows from the secondary battery 21A to the secondary battery 21B.

In such a situation, if the comparator 24A is constructed so as to detect a voltage ΔV across the charging current shut-off switch 22, in spite of a fact that the secondary battery 21A is being charged, the comparator 24A detects the end of charging of the secondary battery 21A and an erroneous decision indicative of the end of charging is displayed on the display unit 28. Therefore, the comparator 24B is constructed so as to compare the voltage at the negative terminal of the secondary battery 21A with a grounding voltage and to detect a reverse current from the secondary battery 21A to the secondary battery 21B.

In such a construction, an example of the charging operation will now be described with reference to the flowchart of Figure 8.

First, in a state (at the time of no load) where the secondary batteries 21A and 21B are not connected, an output voltage V0 of the power source 23 is adjusted and set so as to become a full charge voltage Vb0 (refer to Figure 11) of the secondary batteries 21A and 21B, for example, 8.4V. An AC connector 29 is connected to an AC power source (AC 100V) and the secondary battery 21A is connected (step STP21).

The charging control unit 27 operates the reference power source change-over switch 26, thereby switching to, for example, a contact (a) side of the reference power source 25a (step STP22). The charging control unit 27 starts a rapid charge and also starts a timer (steps STP23, 24). The comparator 24B detects whether the voltage at the negative terminal of the secondary battery 21 A is lower than a grounding voltage or not, and generates a detection signal SB to the charging control unit 27.

When the detection signal SB is at the low level, namely, when the voltage at the negative terminal of the secondary battery 21A is higher than the grounding voltage, the charging control unit 27 finishes the rapid charge when the timer stops (steps STP25, 26, 27). Namely, the charging control unit 27 on/off controls the charging current shut-off switch 22 at a predetermined period or an arbitrary period after the start of the rapid charge. For example, the charging control unit 27 turns on the charging current shut-off switch 22 is turned on only for three minutes after the start of the rapid charge, supplies a charging current, and after the elapse of three minutes, turns off the charging current shut-off switch 22, and shuts off the charging current.

The comparator 24A compares a voltage difference VA between the output voltage V0 of the power source 23 at the time of no load, which is inputted to the positive input terminal when the charge current is shut off, and an open battery voltage VB, with a reference voltage Ea of the reference power source 25a which is inputted to the negative input terminal, detects the voltage ΔV across the charging current shut- off switch 22, and generates a detection signal SA to the charge control unit 27.

When the detection signal SA is at the high level, the charging control unit 27 determines a continuation of charging, and allows the display unit 28 to display "in charge", returns to step STP3, and repeats the foregoing processes (step STP28). When the detection signal SA is at the low level, the charging control unit 27 determines that charging has stopped, allows the display unit 28 to display "charge stop", and stops the charging process (step STP29).

When the charging of the secondary battery 21A is stopped (step STP29), the charging control unit 27 operates the reference power source change-over switch 26, thereby switching to, for example, a contact (b) side of the reference power source 25b (step STP30). A reference voltage Eb of the reference power source 25b and the reference voltage Ea of the reference power source 25a are set so as to be Eb (for example, 120 mV) > Ea (for example, 80 mV).

The comparator 24A compares the voltage difference VA between the output voltage V0 of the power source 23 at the time of no load, which is inputted to the positive input terminal, and the open battery voltage VB, with the reference voltage Eb of the reference power source 25b which is inputted to the negative input terminal, detects the voltage ΔV across the charging current shut-off switch 22 at the same period as that in steps STP24, STP25, and STP26 mentioned above, and transmits the detection signal SA to the charging control unit 27.

When the detection signal SA is at the high level, the charging control unit 27 determines "re- charge", allows the display unit 28 to display "in re-charge", returns to step STP22, and repeats the foregoing processes, (STP31).

When the secondary battery 21B is connected during the processes in steps STP23 to STP28, the comparator 24B inputs a voltage (voltage lower than a reference voltage Ec of the reference power source 25c) at the negative terminal of the secondary battery 21A which is lower than the grounding voltage by an impedance resistor r of the charging current shut-off switch 22, so that it generates the detection signal SB at the high level and outputs this to the charging control unit 27.

When the detection signal SB at the high level is received, the charging control unit 27 determines that the current reversely flows from the secondary battery 21A to the secondary battery 21B, and immediately finishes the rapid charge (steps STP25, 32). Namely, the charging control unit 27 turns off the charge current shut-off switch 22. Thus, the reverse current passes through the resistor 30 and reversely flows.

When the rapid charge is finished in step STP12, the charging control unit 27 discriminates by the detection signal SB whether the reverse current through the resistor 30 continues or not (step STP33). When the detection signal SB is set to the low level, V non-detection timer is started and the detection of the voltage ΔV across the charging current shut-off switch 22 of the comparator 24A is temporarily stopped (step STP34). When the ΔV non-detection timer is stopped, the charging control unit 27 restarts the detection of the voltage ΔV across the charging current shut-off switch 22 of the comparator 24A, returns to step STP23, and repeats the foregoing processes, (step STP35).

So long as the detection signal SB at the high level is inputted from the comparator 24B to the charging control unit 27, or when the ΔV non-detection timer is operating, the charging current shut-off switch 22 is turned off. However, by continuing the display "in-charge" of the display unit 28 for such a period of time, an erroneous decision of the end of charging can be prevented.

Figure 9 is a diagram showing the relationships (charging characteristic curves) between the charging voltage • charging current I, the voltage difference VA, and the charging time T of each of the secondary batteries 21A and 21B in the charging apparatus 20. A relationship (output characteristic of the charging apparatus) between the charging voltage V and the charging current I is similar to that of Figure 11.

As mentioned above, when the secondary battery 21B is connected during the charging of the secondary battery 21 A, the current reversely flows from the secondary battery 21A to the secondary battery 21B. However, the reverse current is set to Ec/r = 0.2A when it is assumed that the impedance resistance r of the charging current shut-off switch 22 is equal to 50 mΩ and the reference voltage Ec of the reference power source 25c is equal to 10 mV. Therefore, the comparator 24B can detect the generation of the reverse current of 0.2A or more. When the reference voltage Ec of the reference power source 25c is further reduced, the generation of a further small reverse current can be detected.

Further, the reverse current after the charging current shut-off switch 22 was turned off reversely flows in the resistor 30. However, now assuming that a resistance R of the resistor 30 is equal to 100 Ω, the reverse current is set to Ec/R = 0.1 mA and the switch is switched so that the reverse current from the secondary battery 21A can be detected by a micro current. As mentioned above, by turning off the charging current shut-off switch 22, the reverse current can be minimized.

When the switch is switched to the charging of the secondary battery 21B, the charging voltage V0B rises. When the charging voltage V0B reaches V0, a charging current IbB decreases (constant voltage charging). On the other hand, since the charging voltage is reduced to V0, a charging current IbA starts to flow in the secondary battery 21A. The charging current IbA rises to the current value which was shut off by the connection of the secondary battery 21B and starts to decrease after that (parallel charging state). The charging current IbA is determined by the charging time of the secondary battery 21 B for a period of time during which the switch is switched from the reverse current to the actual charge and the current reaches the peak of the charging current IbA. Therefore, the ΔV non-detection timer is activated in a manner such that even after the detection signal SB at the high level of the comparator 24B is released, the charging stop state is not immediately cancelled. Although there is no problem if the ΔV non-detection period coincides with the constant current charging period of time of the secondary battery 21B, it can be also set by experiments and examination.

In the above construction, the voltage ΔV is set to, for instance, 80 mV. However, the comparator 24A to detect the voltage ΔV of 80 mV is particularly at the nonproblematic level, even if a voltage of about 5 mV as a variation of an offset voltage is considered, so that a general IC can be used. Since the charging control unit 27 does not detect an analog voltage with high accuracy, for example, a cheap IC of 1k ROM or less such as logic circuit, one-chip microcomputer, or the like can be used.

As mentioned above, since the charging apparatus 20 can use a general comparator to detect a voltage and can use a general microcomputer to control the charging process, the apparatus itself can be made cheap. The charging process is continued until the voltage difference VA reaches the reference voltage Ea after the start of the charging. Further, after the charging is stopped, when the voltage difference VA reaches the reference voltage Eb, the re-charge is started. Therefore, the deterioration in life of the secondary battery 21A doesn't occur and the full charging state can be always held.

Although the above embodiment has been described with respect to the parallel charging of two secondary batteries, even in case of charging in parallel a plurality of (three or more) secondary batteries, by providing the foregoing reverse current detecting means for each of the secondary batteries, a similar effect can be obtained.

Having described specific preferred embodiments of the present invention with reference to the accompanying drawings, it is to be understood that the invention is not limited to those precise embodiments, and that various changes and modifications may be effected therein by one skilled in the art without departing from the invention as defined in the appended claims.

## Claims

1. A charging apparatus comprising means for controlling so as to charge a connected secondary battery by a constant current, the voltage during the constant-current charging phase being equal to or less than a first value, and, when a terminal voltage of said secondary battery rises to said first value, to charge said battery by a constant voltage having said first value, the current during the constant-voltage charging phase being equal to or less than said constant current, the apparatus comprising:
switching means (12) for shutting off a charging current at a certain period;
comparing means for comparing with a first reference voltage a voltage difference (VA) between a first voltage (V0) on the power source side of said switching means (12) when said charging current is shut off and a second voltage (VB) on said secondary battery side whereby to produce a first comparison result; and
control means (17) for stopping the charging or displaying an indication of the end of the charging process in accordance with said first comparison result;
**characterized in that** said comparing means is adapted to perform a comparison with a second reference voltage whereby to produce a second comparison result and the control means is adapted for supplying/discontinuing charging current, or displaying indications, in accordance with the first and second comparison results.

2. A charging apparatus according to claim 1, wherein when said voltage difference (VA) is equal to or less than said first reference voltage (Ea), the charging process is stopped or the end of the charging process is indicated on a display.

3. A charging apparatus according to claim 1,
wherein the comparing means (14) is adapted to compare said voltage difference (VA) with said second reference voltage (Eb) after an elapse of a predetermined time from the stop of the charge whereby to produce said second comparison result; and
the control means (17) is adapted to start a re-charge in accordance with said second comparison result.

4. A charging apparatus according to claim 3, wherein when said voltage difference (VA) is equal to or higher than said second reference voltage (Eb), the re-charge is started.

5. A charging apparatus according to claim 1 for controlling so as to charge a plurality of secondary batteries (21A, 21B), which are connected in parallel, by said constant current and, when a terminal voltage of each of said secondary batteries rises to said constant voltage, by said constant voltage, wherein:
the switching means (22) is adapted to shut off the charging current of one of said secondary batteries (21A) at a certain period; and
the comparing means comprises:
a first comparator (24A) for comparing with said first reference voltage (Ea) a voltage difference (VA) of a first voltage (V0) on the power source side of said switching means (22) when said charging current is shut off and a second voltage (VB) on said secondary battery side; and
a second comparator (24B) for comparing with said second reference voltage (Ec) a negative terminal voltage of one (21A) of said secondary batteries.

6. A charging apparatus according to claim 5, wherein the charging of one of said secondary batteries is stopped when the negative terminal voltage of one of said secondary batteries is equal to or less than said second reference voltage (Ec).

7. A charging apparatus according to claim 5, wherein an operation of said first comparator (24A) is stopped for a predetermined period of time from a timing when the negative terminal voltage of one of said secondary batteries is equal to or higher than said second reference voltage (Ec).

8. A charging method of controlling so as to charge a connected secondary battery by a constant current, the voltage during the constant-current charging phase being equal to or less than a first value, and, when a terminal voltage of said secondary battery rises to said first value, to charge said battery by a constant voltage having said first value, the current during the constant-voltage charging phase being equal to or less than said constant current, comprising the steps of:
shutting off a charging current at a certain period by switching means (12);
comparing with a first reference voltage (Ea) a voltage difference (VA) between a first voltage (V0) on the power source side of said switching means (12) when said charging current is shut off and a second voltage (VB) on said secondary battery side, whereby to produce a first comparison result; and
controlling so as to stop the charging or display an indication of the end of charging in accordance with said comparison result;
**characterized in that** there is further provided the step of performing a comparison with a second reference voltage whereby to produce a second comparison result,
and the controlling step comprises supplying/discontinuing charging current, or displaying indications, in accordance with the first and second comparison results.

9. A charging method according to claim 8, wherein when said voltage difference (VA) is equal to or less than said first reference voltage (Ea), the charging process is stopped or an indication of the end of charging is displayed.

10. A charging method according to claim 8, wherein the step of performing a comparison with said second reference voltage (Eb) comprises comparing, after an elapse of a predetermined time from the stop of the charge, said voltage difference (VA) and a second voltage (VB) on said secondary battery side; and
the controlling step comprises controlling so as to start a re-charging process in accordance with said second comparison result.

11. A charging method according to claim 10, wherein when said voltage difference (VA) is equal to or higher than said second reference voltage (Eb), the re-charging process is started.

12. A charging method according to claim 8 of controlling so as to charge a plurality of secondary batteries (21A, 21B) which are connected in parallel, by said constant current and, when a terminal voltage of each of said secondary batteries rises to said constant voltage, by said constant voltage, wherein:
the step of shutting off the charging current comprises shutting off the charging current of one of said secondary batteries at a certain period by switching means (22); and
the step of performing a comparison with said second reference voltage (Ec) comprises comparing a negative terminal voltage of one (21A) of said secondary batteries with said second reference voltage (Ec).

13. A charging method according to claim 12, wherein the charging of one of said secondary batteries is stopped when the negative terminal voltage of one of said secondary batteries is equal to or less than said second reference voltage.

14. A charging method according to claim 12, wherein an operation in said first comparing step is stopped for a predetermined period of time from a timing when the negative terminal voltage of one of said secondary batteries is equal to or higher than said second reference voltage.

## Patentansprüche

1. Ladevorrichtung, welche eine Einrichtung zum Steuern aufweist, um eine angeschaltete Sekundärbatterie durch einen Konstantstrom zu laden, wobei die Spannung während der Konstantstrom-Phase gleich oder kleiner ist als ein erster Wert, und, wenn eine Anschlussspannung der Sekundärbatterie auf den ersten Wert ansteigt, die Batterie durch eine Konstantspannung zu laden, welche den ersten Wert hat, wobei der Strom während der Konstantspannungs-Ladephase gleich oder kleiner ist als der Konstantstrom, welche aufweist:
eine Schalteinrichtung (12) zum Abschalten eines Ladestroms in einer bestimmten Periode;
eine Vergleichseinrichtung zum Vergleichen - mit einer ersten Referenzspannung - einer Spannungsdifferenz (VA) zwischen einer ersten Spannung (V0) auf Seiten der Spannungsquelle der Schalteinrichtung (12), wenn der Ladestrom abgeschaltet ist, und einer zweiten Spannung (VB) auf Seiten der Sekundärbatterie, um dadurch ein erstes Vergleichsergebnis zu erzeugen; und
eine Steuereinrichtung (17) zum Stoppen des Ladens oder zum Anzeigen einer Anzeige des Endes des Ladeprozesses gemäß dem ersten Vergleichsergebnis;
**dadurch gekennzeichnet, dass** die Vergleichseinrichtung eingerichtet ist, einen Vergleich mit einer zweiten Referenzspannung durchzuführen, um dadurch ein zweites Vergleichsergebnis zu erzeugen, und die Steuereinrichtung eingerichtet ist, einen Ladestrom zu liefern/zu unterbrechen oder um Anzeigen gemäß dem ersten und zweiten Vergleichsergebnis anzuzeigen.

2. Ladevorrichtung nach Anspruch 1, wobei, wenn die Spannungsdifferenz (VA) gleich oder kleiner ist als die erste Referenzspannung (Ea), der Ladeprozess gestoppt wird oder das Ende des Ladeprozesses auf einer Anzeigeeinrichtung angezeigt wird.

3. Ladevorrichtung nach Anspruch,
wobei die Vergleichseinrichtung (14) eingerichtet ist, die Spannungsdifferenz (VA) mit der zweiten Referenzspannung (Eb) nach einem Ablauf einer vorher festgelegten Zeit vom Stopp des Ladens zu vergleichen, um dadurch das zweite Vergleichsergebnis zu erzeugen; und
die Steuereinrichtung (17) eingerichtet ist, das Wiederaufladen gemäß dem zweiten Vergleichsergebnis zu beginnen.

4. Ladevorrichtung nach Anspruch 3, wobei, wenn die Spannungsdifferenz (VA) gleich oder höher ist als die zweite Referenzspannung (Eb), das Wiederaufladen begonnen wird.

5. Ladevorrichtung nach Anspruch 1 zum Steuern, um mehrere Sekundärbatterien (21 A, 21 B), die parallel geschaltet sind, durch den Konstantstrom, und, wenn eine Anschlussspannung jeder der Sekundärbatterien auf die Konstantspannung ansteigt, durch die Konstantspannung zu laden, wobei:
die Schalteinrichtung (22) eingerichtet ist, den Ladestrom einer der Sekundärbatterien (21A) in einer bestimmten Periode abzuschalten; und
die Vergleichseinrichtung aufweist:
einen ersten Komparator (24A) zum Vergleichen - mit einer ersten Referenzspannung (Ea) - einer Spannungsdifferenz (VA) einer ersten Spannung (V0) auf Seiten der Spannungsquelle der Schalteinrichtung (22), wenn der Ladestrom abgeschaltet ist, und einer zweiten Spannung (VB) auf Seiten der Sekundärbatterie; und
einen zweiten Komparator (24B) zum Vergleichen - mit der zweiten Referenzspannung (Ec) - einer negativen Anschlussspannung einer (21 A) der Sekundärbatterien.

6. Ladevorrichtung nach Anspruch 5, wobei das Laden einer der Sekundärbatterien gestoppt wird, wenn die negative Anschlussspannung einer der Sekundärbatterien gleich oder kleiner ist als die zweite Referenzspannung (Ec).

7. Ladevorrichtung nach Anspruch 5, wobei ein Betrieb des ersten Komparators (24A) eine vorher festgelegte Zeitperiode lang von einem Zeitpunkt an gestoppt wird, wenn die negative Anschlussspannung einer der Sekundärbatterien gleich oder höher ist als die zweite Referenzspannung (Ec).

8. Ladeverfahren zum Steuern, um eine angeschaltete Sekundärbatterie durch einen Konstantstrom zu laden, wobei die Spannung während der Konstantstrom-Ladephase gleich oder kleiner ist als ein erster Wert, und, wenn eine Anschlussspannung der Sekundärbatterie auf den ersten Wert ansteigt, die Batterie durch eine Konstantspannung zu laden, welche den ersten Wert hat, wobei der Strom während der Konstantspannung-Ladephase gleich oder kleiner ist als der Konstantstrom, welches folgende Schritte aufweist:
Abschalten eines Ladestroms in einer bestimmten Periode durch eine Schalteinrichtung (12);
Vergleichen - mit einer ersten Referenzspannung (Ea) - einer Spannungsdifferenz (VA) zwischen einer ersten Spannung (V0) auf Seiten der Spannungsquelle der Schalteinrichtung (12), wenn der Ladestrom abgeschaltet ist, und einer zweiten Spannung (VB) auf Seiten der Sekundärbatterie, um dadurch ein erstes Vergleichsergebnis zu erzeugen; und
Steuern, um das Laden anzuhalten oder eine Anzeige vom Ende des Ladens anzuzeigen, gemäß dem Vergleichsergebnis;
**dadurch gekennzeichnet, dass** außerdem der Schritt zum Durchführen eines Vergleichs mit einer zweiten Referenzspannung vorgesehen ist, um dadurch ein zweites Vergleichsergebnis zu erzeugen,
und der Steuerschritt das Liefern/Unterbrechen des Ladestroms aufweist, oder um Anzeigen gemäß dem ersten und dem zweiten Vergleichsergebnis anzuzeigen.

9. Ladeverfahren nach Anspruch 8, wobei, wenn die Spannungsdifferenz (VA) gleich oder kleiner ist als die erste Referenzspannung (Ea), der Ladeprozess angehalten wird oder eine Anzeige vom Ende des Ladens angezeigt wird.

10. Ladeverfahren nach Anspruch 8, wobei der Schritt zum Durchführen eines Vergleichs mit der zweiten Referenzspannung (Eb) das Vergleichen - nach einem Ablauf einer vorher festgelegten Zeit vom Stopp des Ladens - der Spannungsdifferenz (VA) und einer zweiten Spannung (VB) auf Seiten der Sekundärbatterie aufweist; und
der Steuerschritt das Steuern aufweist, um einen Wiederaufladeprozess gemäß dem zweiten Vergleichsergebnis zu beginnen.

11. Ladeverfahren nach Anspruch 10, wobei, wenn die Spannungsdifferenz (VA) gleich oder höher ist als die zweite Referenzspannung (Eb), der Wiederaufladeprozess begonnen wird.

12. Ladeverfahren nach Anspruch 8 zum Steuern, um mehrere Sekundärbatterien (21A, 21 B), welche parallel geschaltet sind, durch den Konstantstrom, und, wenn eine Anschlussspannung jeder der Sekundärbatterien auf die Konstantspannung ansteigt, durch die Konstantspannung zu laden, wobei:
der Schritt zum Abschalten des Ladestroms das Abschalten des Ladestroms einer der Sekundärbatterien in einer bestimmten Periode durch die Schalteinrichtung (22) aufweist; und
der Schritt zum Durchführen eines Vergleichs mit der zweiten Referenzspannung (Ec) das Vergleichen einer negativen Anschlussspannung einer (2 1 A) der Sekundärbatterien mit der zweiten Referenzspannung (Ec) aufweist.

13. Ladeverfahren nach Anspruch 12, wobei das Laden einer der Sekundärbatterien gestoppt wird, wenn die negative Anschlussspannung einer der Sekundärbatterien gleich oder kleiner ist als die zweite Referenzspannung.

14. Ladeverfahren nach Anspruch 12, wobei ein Betrieb im ersten Vergleichsschritt eine vorher festgelegte Zeitperiode lang von einem Zeitpunkt an gestoppt wird, wenn die negative Anschlussspannung einer der Sekundärbatterien gleich oder höher ist als die zweite Referenzspannung.

## Revendications

1. Appareil de charge comprenant un moyen pour réaliser une commande de manière à charger au moyen d'un courant constant, un accumulateur secondaire connecté, la tension pendant la phase de charge à courant constant étant égale ou inférieure à une première valeur et, lorsqu'une tension de borne dudit accumulateur secondaire croît jusqu'à ladite première valeur, de manière à charger ledit accumulateur au moyen d'une tension constante présentant ladite première valeur, le courant pendant la phase de charge à tension constante étant égal ou inférieur audit courant constant, l'appareil comprenant :
un moyen de commutation (12) pour couper un courant de charge à une certaine période ;
un moyen de comparaison pour comparer, avec une première tension de référence, une différence de tension (VA) entre une première tension (V0) sur le côté de source de puissance dudit moyen de commutation (12) lorsque ledit courant de charge est coupé et une seconde tension (VB) sur ledit côté d'accumulateur secondaire afin d'ainsi produire un premier résultat de comparaison ; et
un moyen de commande (17) pour arrêter la charge ou pour afficher une indication de la fin du processus de charge conformément audit premier résultat de comparaison,
**caractérisé en ce que** ledit moyen de comparaison est adapté pour réaliser une comparaison avec une seconde tension de référence afin d'ainsi produire un second résultat de comparaison et le moyen de commande est adapté pour appliquer/interrompre le courant de charge ou pour afficher des indications, conformément aux premier et second résultats de comparaison.

2. Appareil de charge selon la revendication 1, dans lequel, lorsque ladite différence de tension (VA) est égale ou inférieure à ladite première tension de référence (Ea), le processus de charge est arrêté ou la fin du processus de charge est indiquée sur un affichage.

3. Appareil de charge selon la revendication 1, dans lequel :
le moyen de comparaison (14) est adapté pour comparer ladite différence de tension (VA) avec ladite seconde tension de référence (Eb) après l'écoulement d'un temps prédéterminé depuis l'arrêt de la charge afin d'ainsi produire ledit second résultat de comparaison ; et
le moyen de commande (17) est adapté pour démarrer une re-charge conformément audit second résultat de comparaison.

4. Appareil de charge selon la revendication 3, dans lequel, lorsque ladite différence de tension (VA) est égale ou supérieure à ladite seconde tension de référence (Eb), la re-charge est démarrée.

5. Appareil de charge selon la revendication 1 pour réaliser une commande de manière à charger une pluralité d'accumulateurs secondaires (21A, 21B) qui sont connectés en parallèle au moyen dudit courant constant et, lorsqu'une tension de borne de chacun desdits accumulateurs secondaires croît jusqu'à ladite tension constante, au moyen de ladite tension constante, dans lequel :
le moyen de commutation (22) est adapté de manière à couper le courant de charge de l'un desdits accumulateurs secondaires (21A) à une certaine période ; et
le moyen de comparaison comprend :
un premier comparateur (24A) pour comparer, avec ladite première tension de référence (Ea), une différence de tension (VA) d'une première tension (V0) sur le côté de source de puissance dudit moyen de commutation (22) lorsque ledit courant de charge est coupé et d'une seconde tension (VB) sur ledit côté d'accumulateur secondaire ; et
un second comparateur (24B) pour comparer, avec ladite seconde tension de référence (Ec), une tension de borne négative de l'un (21A) desdits accumulateurs secondaires.

6. Appareil de charge selon la revendication 5, dans lequel la charge de l'un desdits accumulateurs secondaires est arrêtée lorsque la tension de borne négative de l'un desdits accumulateurs secondaires est égale ou inférieure à ladite seconde tension de référence (Ec).

7. Appareil de charge selon la revendication 5, dans lequel un fonctionnement dudit premier comparateur (24A) est arrêté pendant une période temporelle prédéterminée depuis un cadencement auquel la tension de borne négative de l'un desdits accumulateurs secondaires est égale ou supérieure à ladite seconde tension de référence (Ec).

8. Procédé de charge consistant à réaliser une commande de manière à charger un accumulateur secondaire connecté au moyen d'un courant constant, la tension pendant la phase de charge à courant constant étant égale ou inférieure à une première valeur et, lorsqu'une tension de borne dudit accumulateur secondaire croît jusqu'à ladite première valeur, de manière à charger ledit accumulateur au moyen d'une tension constante présentant ladite première valeur, le courant pendant la phase de charge à tension constante étant égal ou inférieur audit courant constant, comprenant les étapes de :
coupure d'un courant de charge à une certaine période par un moyen de commutation (12) ;
comparaison, avec une première tension de référence (Ea), d'une différence de tension (VA) entre une première tension (V0) sur le côté de source de puissance dudit moyen de commutation (12) lorsque ledit courant de charge est coupé et une seconde tension (VB) sur ledit côté d'accumulateur secondaire afin d'ainsi produire un premier résultat de comparaison ; et
commande de manière à arrêter la charge ou de manière à afficher une indication de la fin de charge conformément audit résultat de comparaison,
**caractérisé en ce qu'**est en outre prévue l'étape de réalisation d'une comparaison avec une seconde tension de référence afin d'ainsi produire un second résultat de comparaison ; et
l'étape de commande comprend l'application/l'interruption du courant de charge ou l'affichage d'indications conformément aux premier et second résultats de comparaison.

9. Procédé de charge selon la revendication 8, dans lequel, lorsque ladite différence de tension (VA) est égale ou inférieure à ladite première tension de référence (Ea), le processus de charge est arrêté ou une indication de la fin de charge est affichée.

10. Procédé de charge selon la revendication 8, dans lequel :
l'étape de réalisation d'une comparaison avec ladite seconde tension de référence (Eb) comprend la comparaison, après l'écoulement d'un temps prédéterminé depuis l'arrêt de la charge, de ladite différence de tension (VA) et d'une seconde tension (VB) sur ledit côté d'accumulateur secondaire ; et
l'étape de commande comprend la réalisation d'une commande de manière à démarrer un processus de re-charge conformément audit second résultat de comparaison.

11. Procédé de charge selon la revendication 10, dans lequel, lorsque ladite différence de tension (VA) est égale ou supérieure à ladite seconde tension de référence (Eb), le processus de re-charge est démarré.

12. Procédé de charge selon la revendication 8 consistant à réaliser une commande de manière à charger une pluralité d'accumulateurs secondaires (21A, 21B) qui sont connectés en parallèle, au moyen dudit courant constant et lorsqu'une tension de borne de chacun desdits accumulateurs secondaires croît jusqu'à ladite tension constante, au moyen de ladite tension constante, dans lequel :
l'étape de coupure du courant de charge comprend la coupure du courant de charge de l'un desdits accumulateurs secondaires à une certaine période par un moyen de commutation (22) ; et
l'étape de réalisation d'une comparaison avec ladite seconde tension de référence (Ec) comprend la comparaison d'une tension de borne négative de l'un (21A) desdits accumulateurs secondaires avec ladite seconde tension de référence (Ec).

13. Procédé de charge selon la revendication 12, dans lequel la charge de l'un desdits accumulateurs secondaires est arrêtée lorsque la tension de borne négative de l'un desdits accumulateurs secondaires est égale ou inférieure à ladite seconde tension de référence.

14. Procédé de charge selon la revendication 12, dans lequel un fonctionnement au niveau de ladite première étape de comparaison est arrêté pendant une période temporelle prédéterminée depuis un cadencement lorsque la tension de borne négative de l'un desdits accumulateurs secondaires est égale ou supérieure à ladite seconde tension de référence.
